# EUROPEAN PATENT APPLICATION

(11) **EP 2 249 238 A1**
(43) Date of publication of application: **10.11.2010**
(21) Application number: 09158183.5
(22) Date of filing: 17.04.2009
(51) Int. Cl.: G06F 3/048

(54) **Changing selection focus on an electronic device**

(71) Applicant: RESEARCH IN MOTION LIMITED, Waterloo, Ontario N2L 3W8 (CA)
(72) Inventor: Labrador, Christopher, Waterloo Ontario N2L 3W8 (CA)
(74) Representative: Phillips, Emily Elizabeth

(57) **Abstract**

A method (500) of allowing a user to discontinuously change selection focus on an electronic device is disclosed. A plurality of graphical items is presented on a display screen (501). Upon operation of a selection device in a predetemined manner, selection focus is immediately changed to a default lower priority graphical item (506) without a need to scroll to the default item. Disclosed too is an electronic device (300) having a graphical user interface containing one or more interactive lists (240), and each list containing one or more graphical items (110). An electronic device has a selection device (140) and a computer program product for changing selection focus (100). The computer program product contains a readable medium and an action detection module operative to discontinuously change selection focus (100).

## Description

### FIELD

This disclosure, in a broad sense, is directed towards a user interface for an electronic device. The present disclosure further relates to a method for changing selection focus on an electronic device to allow a user to easily select from among a group of ordered graphical items.

### BACKGROUND

Many handheld electronic devices include user interfaces (UIs) to enable a user to manipulate the device as desired. These devices can include televisions, personal computers, smartphones, personal digital assistants (PDAs), and the like. Some of these devices can include wireless communication functions such that they are able to communicate without the use of additional cords or wires. With the proliferation of wireless communication systems, compatible electronic devices are becoming more prevalent, as well as advanced. For example, electronic devices can connect to the Internet, connect wirelessly to one or more wireless service providers and the like. These higher level functionalities can require greater user interaction with the electronic devices through included UIs which may have originally been designed with other purposes, such as making and receiving telephone calls and sending messages over a related Short Messaging Service (SMS), as the case with smartphones. As might be expected, suppliers of such electronic devices and the related service providers are anxious to meet these customer requirements, but the demands of these more advanced functionalities have in many circumstances rendered the traditional UIs unsatisfactory, a situation that has caused designers to have to improve the UIs through which users input information and control these more complex operations.

The increased computing power and connectivity of such devices has lead to increased choices. However, the increased choices of items on the UI can lead to user frustration in performing tasks with the UI. Thus, an improved UI that accommodates the increased complexity and amount of items displayed to the user is desired.

Additionally, selection of graphical items on the screen of an electronic device can be challenging using traditional user interfaces adapted for an electronic device. Thus an improved user interface for selecting graphical items is desirable.

### BRIEF DESCRIPTION OF THE DRAWINGS

Exemplary methods and arrangements conducted and configured according to the advantageous solutions presented herein are depicted in the accompanying drawings wherein:

Figure 1 illustrates an elevational front view of an electronic device with a display screen containing a group of graphical items in accordance with an exemplary embodiment;

Figure 2 illustrates an elevational front view of an alternative embodiment of an electronic device with a touchpad selection device and a display screen containing a group of graphical items in accordance with an exemplary embodiment;

Figure 3 illustrates an elevational front view of an electronic device with selection focus being changed from a first selection focus to a second selection focus in response to operation of a trackball device in accordance with an exemplary embodiment;

Figure 4 illustrates an elevational front view of an electronic device with selection focus being changed from a second selection focus to a third selection focus in response to operation of a dial in accordance with an exemplary embodiment;

Figure 5 illustrates a flowchart of a method to implement a change of selection focus; and

Figure 6 illustrates a block diagram representing an electronic device interacting in a communication network.

### DETAILED DESCRIPTION

Example embodiments that incorporate one or more aspects of the present disclosure are described and illustrated in the drawings. These illustrated examples are not intended to be a limitation on the present disclosure. For example, one or more aspects of the present disclosure can be utilized in other embodiments of various types of electronic devices. Electronic device includes, but is not limited to, mobile stations, cellular telephones, personal digital assistants (PDAs), two-way paging devices, mobile phones, televisions, MP3 players, portable media players, gaming devices, and any device capable of displaying user selectable functions. While the majority of examples presented herein focus on smartphones and the like, one of ordinary skill in the art would appreciate that the disclosure equally applies to other electronic devices. Still further, in the drawings, the same reference numerals are employed for designating the same elements.

As the size of many electronic devices has decreased it has also become more important to maintain the ease with which the user can utilize the user interface and make selections from on-screen options. Also, as the number of functions which may be performed by electronic devices has increased, it has become valuable to simplify the manner in which a user will choose from among those functions.

For example, according to the present disclosure, a user can choose actions or functions he or she wishes to activate (for example, send a text message) on an electronic device based upon the present graphical items (which can be arranged in at least one group), each graphical item corresponding to a possible desired function. Each graphical item can be indicated for selection using a selection focus. The selection focus can take the form of a cursor, a highlighted area surrounding the graphical item, a change in color of the graphical item, a change in background around the graphical item, and the like. The graphical items can include at least one folder that is displayed on a user interface for selection. Additionally, the graphical items can be arranged in a menu or a list of functions, wherein the individual items in the menu or list are represented by words or icons on a display. In yet another example, the graphical items can include individual emails in list of emails received, where each item in the list can be a graphical item, while in other embodiments each item in the list can comprise a plurality of graphical items. The graphical items can also include icons, symbols, words, and the like. The selection focus allows the user to visually receive an indication of which among the plurality of graphical items is currently indicated.

According to the present disclosure, an electronic device can be programmed with a predetermined rank of graphical items, and can include a selection device whereby a user is able to signal his or her desire to change selection focus from one graphical item to a subsequent predetermined graphical item. If, the subsequent predetermined graphical item is not adjacent to the graphical item which is the target of selection focus, a user is able to immediately move selection focus to the subsequent predetermined graphical item without selection focus being directed to intervening graphical items.

The user indicates a desire to immediately change the selection focus from one or more graphical items to a non-adjacent default graphical item by operating a selection device in a manner that overcomes a predetermined threshold amount, for example, by rotating a wheel or trackball device very quickly, or by quickly moving a finger across a touchpad or otherwise touching a selection device in a predefined manner.

The selection focus can be controlled using a selection device. In one example, the selection device is a trackball. Other selection devices contemplated within this disclosure include, but are not limited to, trackwheels, navigation pads, navigation buttons, joysticks, or one or more keys, or the like. According to the present disclosure a determination of whether action on the selection device exceeds a threshold amount can be made. For example, a trackball can be equipped with sensors so that a determination of the velocity of the action can be made. In at least another embodiment, a determination can be made of the acceleration of the action. In at least another embodiment, a determination can be made of whether one or more predefined keys or buttons is depressed when predetermined graphical items are present. In at least another embodiment, a threshold amount could be the rapidity with which one or more keys or buttons is depressed.

When the action threshold is a velocity threshold, a determination is made using the selection device of the velocity of the action. For example, if the selection device is a trackwheel, a determination is made whether the velocity at which the wheel is rotated exceeds the threshold amount for the velocity. In another example wherein the selection device is a touchpad, a determination is made as to the velocity at which user moves a finger or other objet across a touchpad and whether the velocity exceeds the threshold amount. A determination in regards to the acceleration of the action can be made in a similar fashion and used to determine if the sensed action is above a threshold amount. The determination of whether an action exceeds a threshold amount can be implemented based upon a theme. Additionally, in at least one embodiment, the threshold amount could be user programmable. In other embodiments, the currently running application on the device can be programmed to set the threshold amount.

If a determination is made that the action on the selection device exceeds a threshold amount, the selection focus changes from a first selection focus to a second predetermined graphical item. The first selection focus as used herein refers to the selection focus associated with the graphical item prior to receiving the action of interest from the selection tool. If the action on the selection device does not exceed the threshold amount the selection focus will follow its normal operation, which can include going individually through the graphical items, If the action on the selection device exceeds the threshold then the selection focus is moved to a second predetermined graphical item. Thus, the selection focus can be said to move discontinuously from the first graphical item to a second predetermined graphical item, such that the selection focus does not traverse each graphical item or step wise traverse the graphical items between the first graphical item and the second predetermined graphical item.

The second predetermined graphical item can be selected using a variety of different factors and preselections. For example, the second predetermined graphical item can be a graphical item that the user has selected. In another embodiment, the second predetermined graphical item can be the next most frequently used graphical item after the first graphical item, where the first graphical item that the selection focus is concentrated on is the most frequently used graphical item. In other embodiments, the second predeterimined graphical item can be selected based upon one of the following: currently executing program, a theme, and the like. Additionally, a third and subsequent number of predetermined graphical items selected as described above are also contemplated within this disclosure.

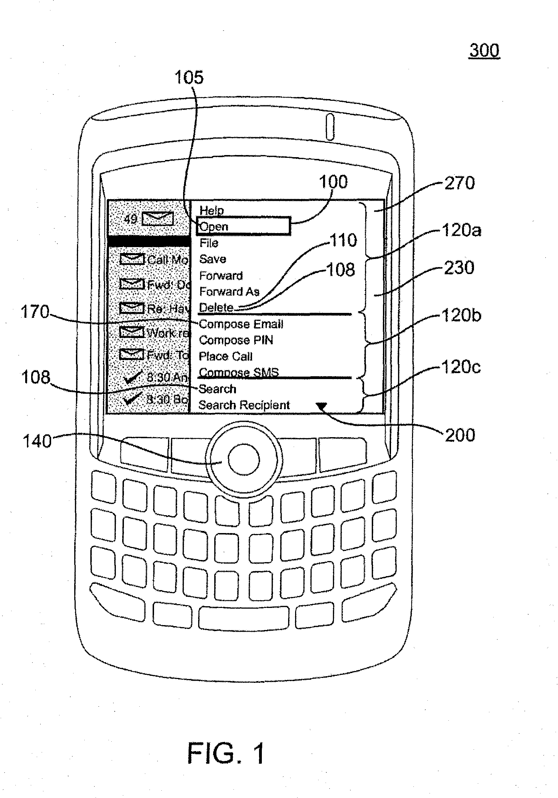

An illustrative embodiment according to this disclosure is shown in Figure 1. The electronic device 300 includes a graphical user interface 230 having a list of graphical items 110. The graphical items 110 in Figure 1 include: "Help", "open", "File", "Save", "Forward", "Forward As", "Delete", "Compose Email", "Compose PIN", "Place Call", "Compose SMS", "Search", and "Search Recipient." The indicator 200 indicates that there are more graphical items 110 listed below the visible portion of the list. Thus, the list shown on the graphical user interface 230 does not illustrate all of the available graphical items for that list because some of the graphical items are off the screen.

Referring still to the example shown in Figure 1, when an action is detected on the selection device 140 (represented in this example by a trackball) which exceeds an action threshold, such as a velocity or acceleration threshold as discussed above, the selection focus 100 changes from "Open" to the second predetermined graphical item 170. In the example of Figure 1, the second predetermined graphical item 170 is the graphical item 110 "Compose Email." As mentioned above, once the second predetermined graphical item 170 is selected other subsequent graphical items can be selected using the disclosure contained herein. For example, in one embodiment, three predetermined graphical items can be associated with the list illustrated in Figure 1. The three predetermined graphical items shown in the example of Figure 1 are: "Open", "Compose Email" and "Search". The first predetermined graphical item 105 shown in the example of Figure 1 is "Open". The selection focus 100 is on the graphical item 110 "Open". The location of selection focus 100 is indicated in the embodiment by a box surrounding the graphical item 110 "Open." The box is used to illustrate the selection focus for illustrative purposes and other ways of signifying the graphical items 110 are contemplated herein. For example, the background behind "Open" could be colored. In another example, the text of "Open" could change colors. Other methods of indicating the graphical item as described above are also considered within the scope of this disclosure. "Compose Email" is a second predetermined graphical item 170. Additionally, a third predetermined graphical item is "Search." The user can traverse the other graphical items 110 by keeping the action beneath the threshold value or reaching the end of the predetermined graphical items. While the predetermined graphical items as illustrated are all arranged in a descending order in the list, other embodiments can have the predetermined graphical items arranged in a different spatial relationship. Furthermore, the determination of whether the action exceeds a predetermined threshold can be made without regard to direction in at least one embodiment. For example, if the selection tool is a trackball and it is rotated upward and exceeds the predetermined threshold, the selection focus 100 can move to the second predetermined graphical item 170 without regard as to the direction the ball is rotated. In other embodiments, a determination can be made of the next preselected graphical item that is in the same direction as the action on the selection device.

An electronic device 300 could be programmed to accept nearly any type of operation of a selection device 140 as operative to discontinuously change the selection focus 100. The action to discontinuously change selection focus 100 could be an acceleration, a velocity, or it could be two depressions of a selection device 140 in quick succession. Yet another possible operative action would be the pressing of one or more certain buttons or keys which have been programmed to change selection focus 100.

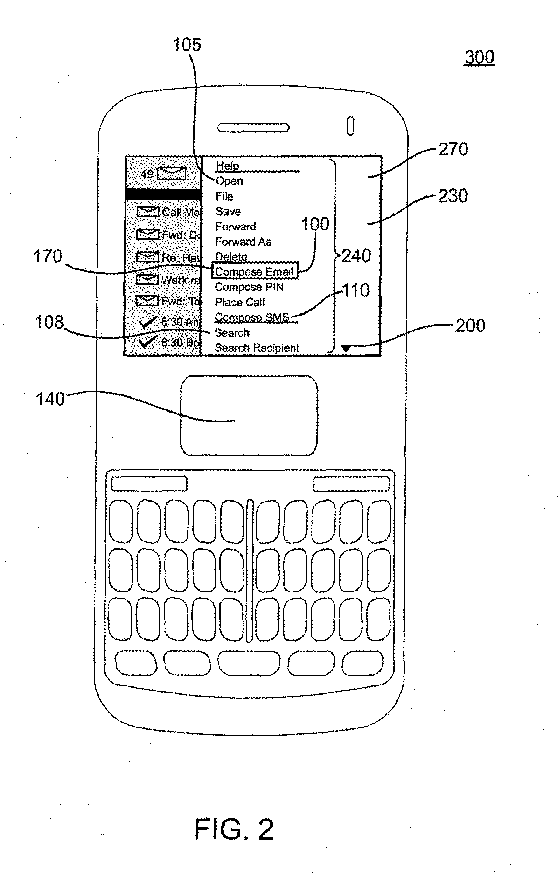

Figure 2 shows an alternate embodiment of an electronic device 300. The interactive list 240 on the graphical user interface 230 of the examplary electronic device 300 in Figure 2 contains the same graphical items 110 as in Figure 1. The selection device 140 in this example is a trackpad or touchpad. The selection focus 100 has been changed from the first predetermined default item 105 "Open" to subsequent predetermined graphical item 170 "Compose Email" upon detection of action on the selection device 140 which exceeds an action threshold.

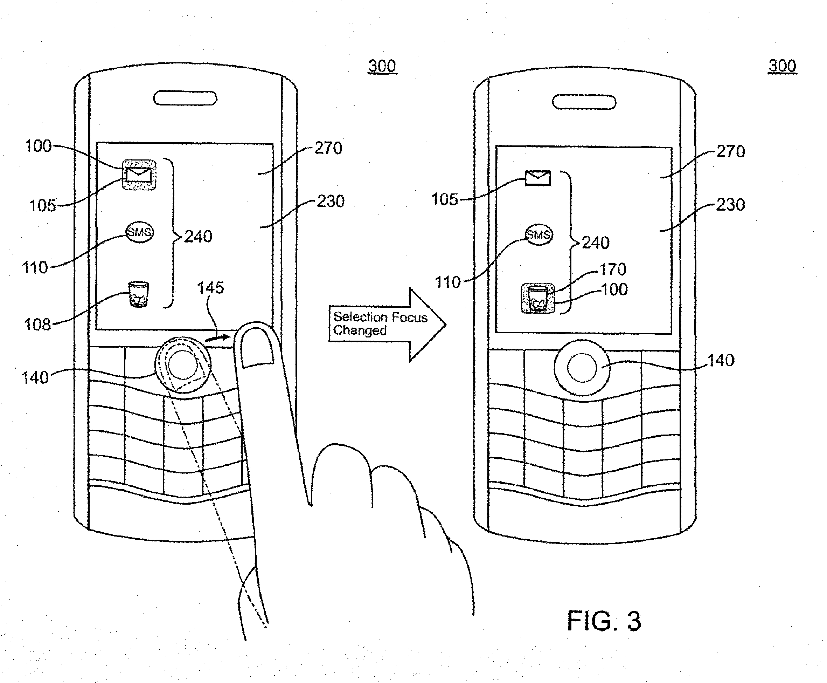

Figure 3 illustrates another embodiment of an electronic device 300 according to the present disclosure. A plurality of graphical items 110 are shown on the graphical user interface. The graphical items 110 as illustrated are icons arranged in an interactive list 240. In other embodiments, the graphical items 110 can be arranged in a traditional home screen orientation where a plurality of icons are arranged in rows and columns. The graphical items 110 as illustrated in Figure 3 include an envelope icon, an SMS button icon and a trash bin icon. A user's finger is illustrated as quickly moving across a selection device 140 whereby a determination can be made whether the action on the selection device 140 exceeds a threshold in order to discontinuously change the selection focus 100 from a current predetermined graphical item 110, (in this example an envelope icon) to a subsequent predetermined graphical item 170, being a recycle or 'trash bin' icon. If the threshold was not exceeded, the selection focus would scroll through the list 240 and the 'SMS' icon would become the subject of the selection focus 100 before the recycle bin. However if an action of the selection device 140 exceeds an action threshold, selection focus 100 will be changed to the second predetermined graphical item 108 the trash bin icon, without having the selection focus indicate the 'SMS' icon. Additionally, other graphical items may not be displayed on the graphical user interface 230 on the display screen.

It will be understood that when discussing graphical items there is no need that all listed or available graphical items be displayed at the same time within this disclosure. Consider the hypothetical example of a list of twenty user actuable graphical items being listed on the display screen of a mobile phone, and items are comprised within five groups of four related items. In that instance, the highest priority item will be the head of the first group, the next highest priority item will be the head of the second group, the third highest priority item will be the head of the third group and so on. In order to avoid making the items inconveniently small, it may be beneficial to have only ten of the twenty items actually visible at any moment. Thus if the first ten graphical items are displayed, the three highest priority predetermined graphical items will be shown, being items 1,4 and 9-and the fourth highest (item 13) and fifth highest will be obscured. In that instance, if selection focus is on any of the first ten graphical items, if an action on the selection device exceeds the threshold amount, selection focus will change to item 13 and the list of items will be shifted up with reference to the display screen, thus bringing the fourth predetermined graphical item, and the group within which it resides, "on screen."

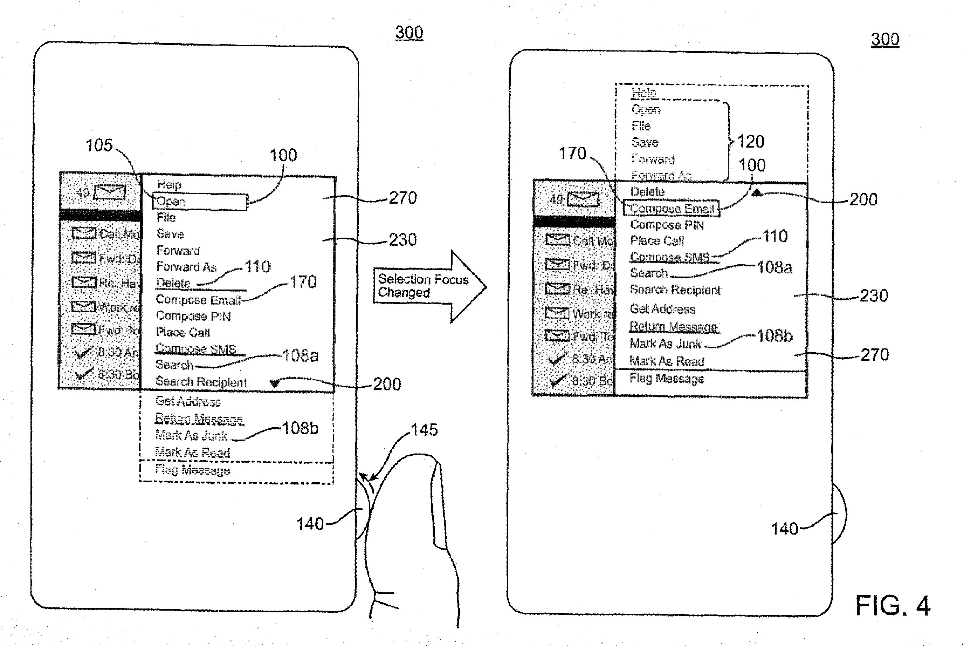

In order to further illustrate the inclusion of the graphical items 110 not illustrated on the graphical user interface 230 in relation to the present disclosure, Figure 4 illustrates a portion off of the display screen inside a box of dashed lines. In order to describe the operation among the plurality of graphical items, the following order of predetermined graphical items will be used. As indicated, the predetermined graphical items are arranged in a particular order such that these can be described as a first default, second default, and so on. As illustrated in Figure 4, when the menu opens, the first selection focus 100 is on the first default 105 "Open." The second predetermined graphical item 170 is "Compose Email." The next two lower priority graphical items 108 are "Search" 108a and "Mark As Junk" 108b. The first three defaults in Figure 4 are displayed on the display screen 270, whereas the third lower priority graphical item (i.e., the fourth default) 108b, "Mark As Junk", is not visible on the display screen 270-though it is still in the same group of graphical items 110.

In the example of Figure 4, the selection device 140 is a trackwheel. Once an action upon the selection device 140 exceeds a threshold, the selection focus 100 changes from "Open" to the second predetermined graphical item 170 "Compose Email" as illustrated in Figure 4. As the selection focus 100 moves to the subsequent predetermined graphical item 170 "Compose Email", the viewable portion interactive list shifts upwards as the selection focus 100 changes. As a result, a group of graphical items 120 consisting of "Help", "Open", "File", "Save", "Forward", "Forward As" moves out of view, illustrated in the dashed box above the viewable portion of the interactive list in Figure 4. Also as a result, the lower priority graphical item 108b "Mark As Junk" becomes visible on the display screen 270 when the change in selection focus 100 moves to "Mark As Junk", As illustrated by the triangular indicator 200, the part of the interactive list of Figure 4 is facing downward on the left hand side indicating that a portion of the interactive list extends off of the display. When the interactive list is shifted as illustrated on the right hand side, the indicator 200 points upward indicating that the other available graphical items 110 are above the displayed graphical items 110. In some embodiments, the indicator can indicate that a portion of the interactive list is both above and below the displayed interactive list.

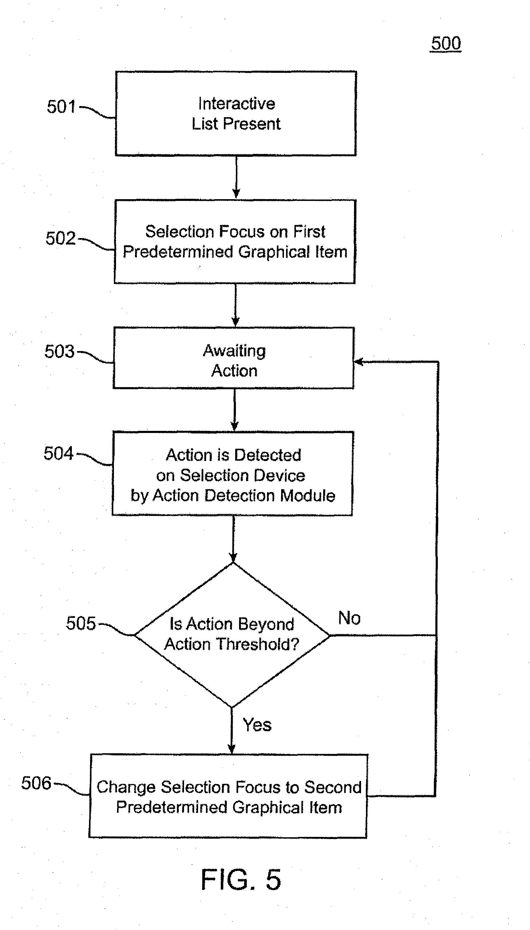

As illustrated in Figure 5, a method for discontinuously changing selection focus 100 is disclosed. The exemplary method 500 is provided by way of example, as there are a variety of ways to carry out the method. Each block shown in Figure 5 represents one or more processes, methods or subroutines performed in the exemplary method 500. In the first block 501, a menu, or list, or group of graphical items becomes available, either because the electronic device 300 has been powered on, or the user has input data, such as the pressing of a button, to command the electronic device 300 to display a plurality of graphical items. In the second block 502, a first selection focus 100 is on the first predetermined graphical item 105. In the next block 503 the electronic device 300 awaits action 145 to be detected at the selection device 140 while displaying an interactive list. The detection of an action 145 (see Figure 3 and Figure 4) at the selection device 140 is represented by block 504. The detection of the action 145 can vary depending on the type of selection device 140 used. For example, if the selection device 140 is a trackball device, the detected action 145 could be the rotation of the trackball device. After an action 145 is detected, the action 145 is evaluated by the electronic device 300 in block 505. If the action 145 detected exceeds a predetermined action threshold, the electronic device 300 will move to the next block 506 in which selection focus 100 is changed to a lower priority graphical item 108. If the value of the detected action 145 does not exceed the action threshold, then the process 500 is returned to block 503 and the selection focus 100 is not shifted to the next default. Once selection focus 100 changes to the next lower priority graphical item 108, as represented by block 506, the electronic device 300 will return to block 503; the electronic device 300 will then await another action 145 to be detected on the selection device 140. Those in the art will therefore appreciate that each detected action 145 is compared to the threshold amount, the comparison being represented by block 505. If the action threshold 150 is exceeded, the selection focus 100 will change from its current location and be moved to a subsequent predetermined graphical item 170, as represented by block 506.

The graphical items discussed above can be grouped together in a logical manner such that related functions are placed near each other. For example, in an email environment, items pertaining to the opening and composition of messages might be adjacent to each other in one group, and items pertaining to viewing and searching folders placed in another group. A consequence of this practice, however, is that a user may seek to move from one group to another group. Therefore, when the selection indicates focus is currently directed to the opening-composing group, the user may wish to go to the folder related group. In that instance a user will move or "scroll" through a number of possible options with a selection device, such as arrow keys, a trackball device, mouse, mouse pad, touchpad, a navigation pad or the like, in order to access the desired group and the intended choice within that group. In addition to the scrolling method of changing selection focus, a user may find it useful to be able to leave one group of graphical items and move directly to another group, without selection focus being directed on intervening items.

In at least one embodiment, the discontinuous movement of the selection focus 100 can be between sub-groups of a given group. For example, in Figure 1 the graphical items can be arranged in three subgroups. The first sub-group 120a of graphical items 110 consists of "Help," "Open," "File," "Same," "Forward," "Forward As," and "Delete." The second sub-group 120b of graphical items 110 consists of "Compose Email", "Compose PIN", "Place Call" and "Compose SMS." A third sub-group 120c of graphical items 110 comprises the graphical items 110 "Search" and "Search Recipient." In the example of Figure 1, the sub-groups 120 of graphical items 110 are separated by a dark line. When the action on the selection device 140 exceeds a threshold, then the selection focus 110 moves from the first item in the first sub-group 120a to the first item in the second sub-group 120b. Likewise, if a further action on the the selection device 140 exceeds a threshold, the the selection focus 110 moves to the third sub-group 120c. If there are further sub-groups and further action that exceeds the threshold that has been determined then the selection focus can traverse to these subsequent sub-groups.

In at least one embodiment within this disclosure an electronic device 300 can include a computer program product for changing selection focus 100. The computer program product can contain one or more computer readable media and an action detection module stored on that one or more media. The action detection module is operative to discontinuously change selection focus 100 from a current predetermined graphical item to a subsequent, (or next highest priority) graphical item upon detection of an action on the selection device which exceeds an action threshold as described above.

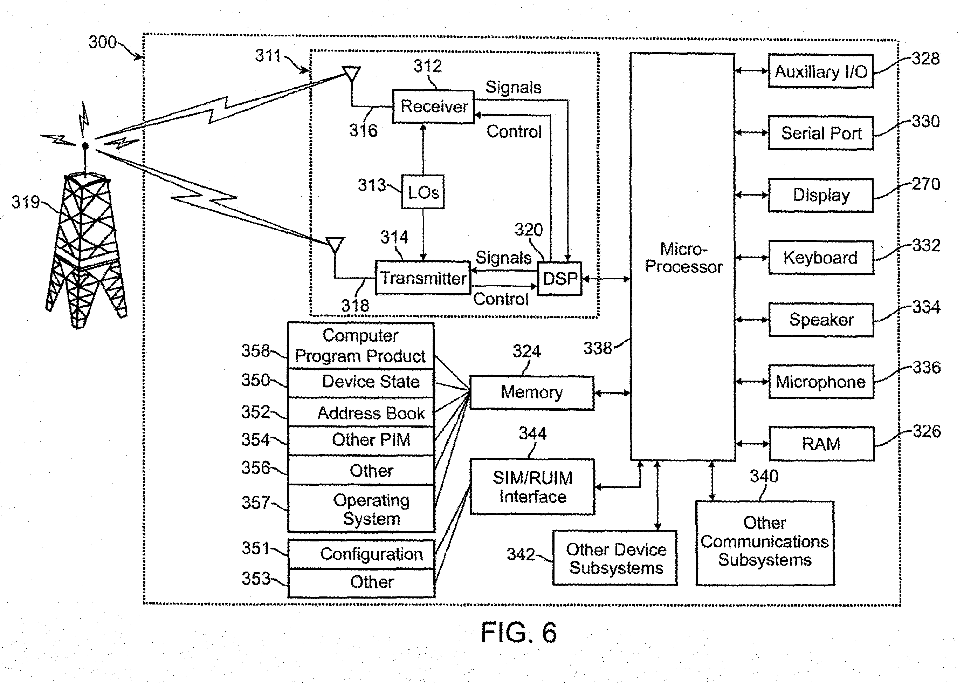

As described above, in one or more embodiments of the disclosure, the electronic device 300 contains an action detection module which is contained within one or more computer readable media, which in turn reside within a computer program product 358 (see Figure 6) on the electronic device 300. Because the action detection module is operative to discontinuously change the selection focus 100 upon detection of an action on the selection device 140 which exceeds or goes beyond an action threshold, the selection focus 100 moves from a current predetermined graphical item to a second predetermined graphical item 170.

The technology can take the form of an entirely hardware embodiment, an entirely software embodiment or an embodiment containing both hardware and software elements. In one embodiment, the technology is implemented in software, which includes but is not limited to firmware, resident software, microcode, etc. Furthermore, the technology can take the form of a computer program product accessible from a computer-usable or computer-readable medium providing program code for use by or in connection with a computer or any instruction execution system. For the purposes of this description, a computer-usable or computer readable medium can be any apparatus that can contain, store, communicate, propagate, or transport the program for use by or in connection with the instruction execution system, apparatus, or electronic device. The medium can be an electronic, magnetic, optical, electromagnetic, infrared, or semiconductor system (or apparatus or electronic device) or a propagation medium (though propagation mediums in and of themselves as signal carriers are not included in the definition of physical computer-readable medium). Examples of a physical computer-readable medium include a semiconductor or solid state memory, magnetic tape, a removable computer diskette, a random access memory (RAM), a read-only memory (ROM), a rigid magnetic disk and an optical disk. Current examples of optical disks include compact disk- read only memory (CD-ROM), compact disk - read/write (CD-R/W) and DVD. Both processors and program code for implementing each aspect of the technology can be centralized or distributed (or a combination thereof) as known to those skilled in the art.

A data processing system suitable for storing program code and for executing program code will include at least one processor coupled directly or indirectly to memory elements through a system bus. The memory elements can include local memory employed during actual execution of the program code, bulk storage, and cache memories that provide temporary storage of at least some program code in order to reduce the number of times code must be retrieved from bulk storage during execution. Input/output or I/O devices (including but not limited to keyboards, displays, pointing devices, etc.) can be coupled to the system either directly or through intervening I/O controllers. Network adapters may also be coupled to the system to enable the data processing system to become coupled to other data processing systems or remote printers or storage devices through intervening private or public networks. Modems, cable modern and Ethernet cards are just a few of the currently available types of network adapters.

The electronic device 300 can be configured to cooperate with a wireless network as illustrated in Figure 6. As disclosed, communication by the electronic device 300 with the wireless network 319 can be any type of communication that both the wireless network 319 and device 300 are enabled to transmit, receive and process. In general, these can be classified as voice and data. Voice communication is communication in which signals for audible sounds are transmitted by the electronic device 300 through the communication network 319. Data is all other types of communication that the electronic device 300 is capable of performing within the constraints of the wireless network 319 as depicted in Figure 6, such as text, SMS messaging, images and the like.

An examplary electronic device 300 in the block diagram of Figure 6 includes a microprocessor 338 that controls the operation of the device 300. A communication subsystem 311 performs all communication transmission and reception with the wireless network 319. The microprocessor 338 further connects with an auxiliary input/output (I/O) subsystem 328, a serial port (preferably a Universal Serial Bus port) 330, a display 270, a keyboard 332, a speaker 334, a microphone 336, random access memory (RAM) 326, and flash memory 324. Other communication subsystems 340 and other device subsystems 342 are generally indicated as being functionally connected with the microprocessor 338 as well. An example of a communication subsystem 340 is that of a short range communication system such as BLUETOOTH® communication module or a Wi-Fi communication module (a communication module in compliance with IEEE 802.11b) and associated circuits and components. Additionally, the microprocessor 338 is able to perform operating system functions and can enable execution of software applications on the electronic device 300.

In the exemplary configuration of Figure 6, the memory 324 is enabled to provide a storage location for the operating system 357, computer program products 358, and data. The operating system 357 is generally configured to manage other application programs that are also stored in memory 324 and executable on the processor 338. The operating system 357 honors requests for services made by application programs 358 through predefined application program interfaces. More specifically, the operating system 357 typically determines the order in which multiple applications 358 are executed on the processor 338 and the execution time allotted for each application 358, manages the sharing of memory 324 among multiple applications 358, handles input and output to and from other device subsystems 342. In addition, users can typically interact directly with the operating system 357 through a user interface, which can include the keyboard 650 and display screen 270. While in an exemplary embodiment the operating system 357 is stored in memory 324 (which may include flash memory), the operating system 357 in other embodiments is stored in read-only memory (ROM) or similar storage element (not shown). As those skilled in the art will appreciate, the operating system 357, device applications (including computer program products 358) or parts thereof can be loaded in RAM 326 or other volatile memory.

With further reference to Figure 6, the memory 324 can contain computer program products 358 or applications for execution on the device 300 including an address book 352, a personal information manager (PIM) 354, and the device state 350. Furthermore, computer program products 358 and other information 356 including data can be segregated upon storage in the memory 324 of the device 300.

When the electronic device 300 is enabled for two-way communication within the wireless communication network 319 as depicted in Figure 6, it can send and receive signals from a mobile communication service. Examples of communication systems enabled for two-way communication include, but are not limited to, the General Packet Radio Service (GPRS) network, the Universal Mobile Telecommunication Service (UMTS) network, the Enhanced Data for Global Evolution (EDGE) network, the Code Division Multiple Access (CDMA) network, High-Speed Packet Access (HSPA) networks, Universal Mobile Telecommunication Service Time Division Duplexing (UMTS-TDD), Ultra Mobile Broadband (UMB) networks, Worldwide Interoperability for Microwave Access (WiMAX), and other networks that can be used for data and voice, or just data or voice. For the systems listed above, the electronic device 300 can require a unique identifier to enable the electronic device 300 to transmit and receive signals from the communication network 319. Other systems can not require such identifying information. GPRS, UMTS, and EDGE use a Subscriber Identity Module (SIM) in order to allow communication with the communication network 319. Likewise, most CDMA systems use a Removable Identity Module (RUIM) in order to communicate with the CDMA network. The RUIM and SIM card can be used in multiple different electronic devices 300. The electronic device 300 can be able to operate some features without a SIM/RUIM card, but it will not be able to communicate with the network 319. A SIM/RUIM interfaces 344 located within the electronic device 300 allows for removal or insertion of a a SIM/RUIM card (not shown). The SIM/RUIM card features memory and holds key configurations 351, and other information 353 such as identification and subscriber related information. With a properly enabled electronic device 300, two-way communication between the electronic device 300 and communication network 319 is possible.

When equipped for two-way communication, the electronic device 300 also features a communication subsystem 311 as indicated in Figure 6. The communication subsystem 311 can be modified so that it can support the operational needs of the electronic device 300. As shown in Figure 6, the subsystem 311 includes a transmitter 314 and receiver 312 including the associated antenna or antennae 316, 318 as described above, local oscillators (LOs) 313, and a processing module 320 which in the presently described exemplary embodiment is a digital signal processor (DSP) 320.

If an electronic device 300 is enabled as described above, or the communication network 319 as shown in Figure 6 does not require such enablement, the two-way communication enabled electronic device 300 is able to both transmit and receive information from the communication network 319. The transfer of communication can be to and from the electronic device 300. In order to communicate with the communication network 319, the electronic device 300 in the presently described exemplary embodiment is equipped with an integral or internal antenna 318 for transmitting signals to the communication network 319. Likewise the electronic device 300 in the presently described exemplary embodiment can be equipped with another antenna 316 for receiving communication from the communication network 319. These antennae 316, 318 in another exemplary embodiment can be combined into a single antenna (not shown). As one skilled in the art would appreciate, the antenna or antennae 316, 318 in another embodiment could be externally mounted on the electronic device 300.

Additionally, some applications, such as shown in Figure 6, which can depend on data transfer data include email, address book entries and calendars. For each such application, synchronization with home-based versions on the applications can be critical for either or both of their long term and short term utility. As an example, emails are often time sensitive, so substantially real time synchronization is highly desirable. Address book entries, on the other hand, can be usually updated less frequently without inconvenience. Therefore, the utility of the electronic device 300 can be enhanced when connectable within a communication system, and particularly when connectable on a wireless basis in a network 319 in which voice, text messaging, and other data transfer are accommodated. The auxiliary I/O subsystem 328 of Figure 6 can take the form of a variety of different navigation tools (multi-directional or single-directional) such as a navigation tool with trackball device assembly as illustrated in the exemplary embodiment shown in Figure 1, or a thumbwheel, a navigation pad, a joystick, or the like. In Figures is and 3, navigation tools are located on the front surface of the electronic device 300 but can also be located on any exterior surface of the electronic device 300 as in the example of Figure 4. Other auxiliary I/O subsystems can include external display devices 270 and externally connected keyboards (not shown). While the above examples have been provided in relation to the auxiliary I/O subsystem 328, other subsystems capable of providing input or receiving output from the electronic device 300 are considered within the scope of this disclosure.

It will be understood that the foregoing description is that of certain embodiments and that various changes and modifications can be made thereto without departing from the scope of this disclosure.

## Claims

1. A method for changing selection focus discontinuously in an electronic device (300), the electronic device (300) comprising a selection device (140) for indicating selection focus (100) and displaying a first (103) selection focus (100) on a first predetermined (105) graphical item (110) from a group (120) of graphical items (110), the method comprising:
determining if an action (145) on the selection device (140) exceeds a threshold amount (150);
changing the selection focus (100) to a subsequent predetermined (170) graphical item (110) from the group (120) of graphical items (110).

2. The method as recited in claim 1, wherein the selection device (140) is a trackball device (180).

3. The method as recited in any one of claims 1-2, wherein the action threshold is a velocity sensed on the selection device (140).

4. The method as recited in any one of claims 1-3, wherein the action threshold is an acceleration detected on the selection device (140).

5. The method as recited in any one of claims 1-4, wherein the first predetermined (105) graphical item (110) has been previously indicated as highest priority graphical item (110).

6. The method as recited in any one of claims 1-5, wherein the first predetermined (105) graphical item (110) has been set as a default.

7. The method as recited in any one of claims 1-6, wherein the subsequent predetermined (170) graphical item (110) has been previously indicated as a lower priority (108) graphical item (110).

8. The method as recited in any one of claims 1-7, wherein the subsequent predetermined (170) graphical item (110) has been set as a second default that is a default to be selected after a first default.

9. The method as recited in any one of claims 1-8, wherein at least some of the group (120) of graphical items (110) are not displayed, and wherein the subsequent (170) predetermined graphical item (110) is one of the group (120) of graphical items (110) not displayed when the first selection focus (100) is displayed.

10. The method as recited in claim 9, further comprising:
determining if a subsequent action on the selection device (140) exceeds the action threshold (150) ;
changing the selection focus (100) to a subsequent predetermined (170) graphical item (110) from the group (120) of graphical items (110).

11. In an electronic device (300) having a graphical user interface (230) including at least one interactive list (240), each list having a plurality of graphical items (110), the electronic device (300) further including a selection device (140) for changing the selection focus (100), a computer program product (358) for changing selection focus (100), the computer program product (358) comprising:
at least one tangible computer readable medium (250);
an action detection module (260):
stored on the medium (250), and
operative to discontinuously change the selection focus (100) from a current predetermined graphical item (110) to a subsequent (170) predetermined graphical item (110), upon detection of action on the selection device (140) beyond an action threshold (150).

12. The computer program product (358) of claim 11, wherein the action operative to discontinuously change the selection focus (100) is acceleration.

13. An electronic device comprising:
a display screen (270);
a processor (338) communicatively coupled to the display screen (270);
a memory (324) communicatively coupled to the processor;
a selection device (140) communicatively coupled to the processor and storing an action threshold;
said processor (338) operative to discontinuously change a selection focus (100) displayed on the display screen (270) from a first predetermined (105) graphical item (110) among a plurality of graphical items (110), at least some of said plurality of graphical items (110) being shown on the display screen (270), to a second predetermined (115) graphical item (110), upon detection of action on the selection device (140) beyond the action threshold.

14. The electronic device (300) as recited in claim 13, wherein said detected action (145) is acceleration.

15. The electronic device (300) as recited in claim 16, wherein at least some or the plurality (125) of graphical items (110) are not displayed at a given time.

## Amended claims

### Amended claims in accordance with Rule 137(2) EPC.

**1.** A method for changing selection focus discontinuously in an electronic device (300), the electronic device (300) comprising a selection device (140) for indicating selection focus (100) and displaying a first (103) selection focus (100) on a first predetermined (105) graphical item (110) from a group (120) of graphical items (110), the method comprising:
determining if an action (145) on the selection device (140) exceeds a threshold amount (150);
discontinuously changing the selection focus (100) to a subsequent predetermined (170) graphical item (110) from the group (120) of graphical items (110) such that a plurality of intervening graphical items (110) are not a target of the selection focus, and wherein the subsequent predetermined graphical item (110) has been previously indicated as a lower priority (108) graphical item (110).

**2.** The method as recited in claim 1, wherein the selection device (140) is a trackball device (180).

**3.** The method as recited in any one of claims 1-2, wherein the action threshold is a velocity sensed on the selection device (140).

**4.** The method as recited in any one of claims 1-3, wherein the action threshold is an acceleration detected on the selection device (140).

**5.** The method as recited in any one of claims 1-4, wherein the first predetermined (105) graphical item (110) has been previously indicated as highest priority graphical item (110).

**6.** The method as recited in any one of claims 1-5, wherein the first predetermined (105) graphical item (110) has been set as a default.

**7.** The method as recited in any one of claims 1-6, wherein the subsequent predetermined (170) graphical item (110) has been set as a second default that is a default to be selected after a first default.

**8.** The method as recited in any one of claims 1-7, wherein at least some of the group (120) of graphical items (110) are not displayed, and wherein the subsequent (170) predetermined graphical item (110) is one of the group (120) of graphical items (110) not displayed when the first selection focus (100) is displayed.

**9.** The method as recited in claim 8, further comprising:
determining if a subsequent action on the selection device (140) exceeds the action threshold (150) ;
changing the selection focus (100) to the subsequent predetermined (170) graphical item (110) from the group (120) of graphical items (110).

**10.** In an electronic device (300) having a graphical user interface (230) including at least one interactive list (240), each list having a plurality of graphical items (110), the electronic device (300) further including a selection device (140) for changing the selection focus (100), a computer program product (358) for changing selection focus (100), the computer program product (358) comprising:
at least one tangible computer readable medium (250);
an action detection module (260):
an action detection module (260):
stored on the medium (250), and
operative to discontinuously change the selection focus (100), upon detection of action on the selection device, from a current predetermined graphical item (110) to a subsequent (170) predetermined graphical item (110) such that a plurality of intervening graphical items (110) are not a target of the selection focus and
wherein the subsequent predetermined graphical item (110) has been previously indicated as a lower priority (108) graphical item (110).

**11.** The computer program product (358) of claim 10, wherein the action operative to discontinuously change the selection focus (100) is acceleration.

**12.** An electronic device comprising:
a display screen (270);
a processor (338) communicatively coupled to the display screen (270);
a memory (324) communicatively coupled to the processor;
a selection device (140) communicatively coupled to the processor and storing an action threshold;
said processor (338) operative to discontinuously change a selection focus (100) displayed on the display screen (270), upon detection of action on the selection device (140) beyond the action threshold, from a first predetermined (105) graphical item (110) among a plurality of graphical items (110), at least some of said plurality of graphical items (110) being shown on the display screen (270), to a second predetermined (115) graphical item (110) such that a plurality of intervening graphical items (110) are not a target of the selection focus and wherein the subsequent predetermined graphical item (110) has been previously indicated as a lower priority (108) graphical item (110).

**13.** The electronic device (300) as recited in claim 12, wherein said detected action (145) is acceleration.

**14.** The electronic device (300) as recited in claim 13, wherein at least some of the plurality (125) of graphical items (110) are not displayed at a given time.
